# EUROPÄISCHE PATENTSCHRIFT

(11) **EP 1 945 957 B1**
(45) Veröffentlichungstag und Bekanntmachung des Hinweises auf die Patenterteilung: **24.02.2010**
(21) Anmeldenummer: 06807553.0
(22) Anmeldetag: 26.10.2006
(51) Int. Cl.: F16B 21/02, F16D 1/06

(54) **VORRICHTUNG ZUM SICHERN EINER WELLE-NABE-VERBINDUNG ZWEIER WELLEN**
MECHANISM FOR SECURING A SHAFT-HUB CONNECTION OF TWO SHAFTS
DISPOSITIF POUR MAINTENIR UNE LIAISON ARBRE-MOYEU ENTRE DEUX ARBRES

(30) Priorität: 02.11.2005 DE 102005052161
(43) Veröffentlichungstag der Anmeldung: 23.07.2008
(73) Patentinhaber: Deere & Company, Moline, IL 61265-8098 (US)
(72) Erfinder: SCHÄFER, Helmut, 68775 Ketsch (DE); SCHMITT, Holger, 67435 Neustadt/Weinstrasse (DE)
(74) Vertreter: Holst, Sönke
(86) Internationale Anmeldenummer: PCT/EP2006/067782
(87) Internationale Veröffentlichungsnummer: WO 2007/051748

(56) Entgegenhaltungen:
- US-A- 1 915 014
- US-A- 1 937 965
- US-A- 3 245 450
- US-B1- 7 118 138

## Beschreibung

Die Erfindung betrifft eine Vorrichtung zum Sichern einer Welle-Nabe-Verbindung zweier Wellen, insbesondere zum Sichern eines Zapfwellenstummels an einer Zapfwelle eines Traktors. Die Vorrichtung umfasst ein Verriegelungselement, mittels welchem ein unbeabsichtigtes Lösen einer hergestellten Welle-Nabe-Verbindung zwischen den beiden Wellen in axialer Richtung verhinderbar ist. Eine der beiden Wellen weist eine Nabe mit Mitteln zur formschlüssigen Verbindung mit der anderen Welle auf. Die andere Welle weist Mittel zur formschlüssigen Verbindung mit der die Nabe umfassenden Welle auf. Das Verriegelungselement ist im Wesentlichen ringförmig ausgebildet und an der ersten der beiden Wellen angeordnet. Das Verriegelungselement weist eine Verzahnung auf, welche im Wesentlichen komplementär zu einer Verzahnung der zweiten der beiden Wellen ausgebildet ist. Das Verriegelungselement ist relativ zur ersten Welle von einer verriegelten Position in eine entriegelte Position verdrehbar angeordnet, wobei in der verriegelten Position die Verzahnungen überdeckend zueinander angeordnet und in der entriegelten Position die Verzahnungen nicht überdeckend zueinander angeordnet sind. Das Verriegelungselement ist derart angeordnet, dass in der verriegelten Position eine hergestellte Welle-Nabe-Verbindung zwischen den beiden Wellen durch die insbesondere stirnseitige Anlage der Verzahnung des Verriegelungselements an der Verzahnung der zweiten Welle gesichert ist.

Eine derartige Vorrichtung zur Herstellung einer lösbaren Verbindung zwischen zwei ineinanderschiebbaren Wellen, mithin also einer Welle-Nabe-Verbindung geht aus der US 1 915 014 A hervor. Die beiden Wellen weisen ein männliches Kupplungsteil und ein weibliches Kupplungsteil mit jeweils korrespondierenden Laschen und Kerben auf, die ein Ineinanderschieben der Wellen ermöglichen, diese jedoch bezüglich eines Verdrehens sichern. Innerhalb einer in dem weiblichen Kupplungsteil ausgebildeten Ausnehmung ist ein Verriegelungselement in Gestalt eines drehbaren Sicherungsrings angeordnet, der an seinem Innenumfang derart gekerbt bzw. gelascht ist, dass in einer entriegelten Position des Sicherungsrings die Kerben bzw. Laschen mit denjenigen des männlichen Kupplungsteils fluchten und ein Ineinanderschieben der beiden Wellen ermöglichen. Der Sicherungsring lässt sich in ineinandergeschobenem Zustand der beiden Wellen entlang einer an dem männlichen Kupplungsteil umfangsmäßig ausgebildeten Vertiefung derart in eine verriegelte Position verdrehen, dass eine Keilverbindung zwischen den Laschen des Sicherungsrings und denjenigen des männlichen Kupplungsteils hergestellt wird. Zur Verwirklichung eines Verriegelungsmechanismus weist der Sicherungsring an seinem Außenumfang eine Zahnung auf, in die ein mit einem Antriebsschaft verbundenes Zahnrad eingreift, sodass der Sicherungsring zur Herstellung der Keilverbindung von außen über einen mit dem Antriebsschaft verbundenen Schraubenkopf in Drehung versetzt werden kann.

Um eine verlässliche Sicherung der Welle-Nabe-Verbindung zu gewährleisten, ist mittels der Keilverbindung eine ausreichende Vorspannkraft zwischen den Laschen des Sicherungsrings und denjenigen des männlichen Kupplungsteils aufzubauen. Andernfalls besteht bei Einwirkung äußerer Kräfte, wie sie beim Betrieb eines Kraftfahrzeugs aufgrund von Vibrationen, Schlägen oder dergleichen auftreten, die Möglichkeit, dass sich die Keilverbindung unbeabsichtigt löst.

Es ist daher Aufgabe der vorliegenden Erfindung, eine Vorrichtung der eingangs genannten Art dahingehend weiterzubilden, dass eine verbesserte Sicherung der Welle-Nabe-Verbindung gegenüber einem unbeabsichtigten Lösen geschaffen wird.

Diese Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist die Vorrichtung der eingangs genannten Art dadurch gekennzeichnet, dass das Verriegelungselement mittels einer Vorspannkraft in die verriegelte Position drängbar ist, wobei die Vorspannkraft mittels einer Torsionsfeder erzeugt wird.

Durch entsprechende Dimensionierung der Torsionsfeder lässt sich gewährleisten, dass das Verriegelungselement stets mit einer ausreichenden Vorspannkraft beaufschlagt wird, um ein unbeabsichtigtes Lösen der Welle-Nabe-Verbindung zu verhindern.

Mit der erfindungsgemäßen Vorrichtung ergibt sich zudem eine vereinfachte und verbesserte Art und Weise, eine Welle-Nabe-Verbindung zu sichern. So ist zunächst das Verriegelungselement in seine entriegelte Position zu verbringen, die eine der beiden Wellen wird mit den Mitteln zur formschlüssigen Verbindung in die Nabe der anderen Welle eingeführt und das Verriegelungselement wird sodann selbsttätig aufgrund der Vorspannkraft der Torsionsfeder in seine verriegelte Position verbracht. Zum Lösen der Welle-Nabe-Verbindung wird in umgekehrter Reihenfolge verfahren, d.h. das Verriegelungselement wird in seine entriegelte Position verbracht und die Welle-Nabe-Verbindung wird gelöst.

In einer bevorzugten Ausführungsform ist das Verriegelungselement an einem Endbereich der ersten Welle angeordnet. Zusätzlich oder alternativ weist das Verriegelungselement einen für einen Bediener mit der Hand ergreifbaren Griffbereich auf und kann unmittelbar vom Bediener gegenüber der ersten Welle verdreht werden.

Bevorzugt ist das Verriegelungselement derart an der ersten Welle angeordnet, dass bei einer hergestellten Welle-Nabe-Verbindung zwischen den beiden Wellen bezüglich der axialen Richtung, in welcher die eine Welle aus der Nabe der anderen Welle zu lösen ist, die Verzahnung des Verriegelungselements der Verzahnung der zweiten Welle nachgeordnet ist. Mit anderen Worten ist ein Lösen der Welle-Nabe-Verbindung dann verhinderbar, wenn die Verzahnungen des Verriegelungselements und der zweiten Welle überdeckend zueinander angeordnet sind.

Gemäß einer weiteren bevorzugten Ausführungsform ist die Verzahnung des Verriegelungselements im Wesentlichen komplementär zu den Mitteln zur formschlüssigen Verbindung der zweiten Welle ausgebildet. Somit stellen die Mittel zur formschlüssigen Verbindung, welche üblicherweise ebenfalls eine Verzahnung aufweisen, auch die Verzahnung der zweiten Welle dar, sodass zu einer herkömmlichen Welle-Nabe-Verbindung lediglich das eine Verzahnung aufweisende Verriegelungselement vorzusehen ist, um die erfindungsgemäße Vorrichtung zu realisieren. Hierdurch kann in ganz besonders vorteilhafter Weise eine einfache und intuitive Handhabung beim Herstellen oder beim Lösen der Welle-Nabe-Verbindung erzielt werden.

Grundsätzlich kann vorgesehen sein, dass die Anzahl der Zähne der Verzahnung des Verriegelungselements der Anzahl der Zähne der zweiten Welle entspricht. In einem solchen Fall kann das Verriegelungselement eine Innenverzahnung aufweisen, welche im Wesentlichen komplementär zu einer Außenverzahnung der zweiten Welle ausgebildet ist.

Bevorzugt ist das Verriegelungselement in entgegengesetzter Richtung zur üblichen Drehrichtung der ersten Welle vorgespannt. Da sich eine Zapfwelle eines Traktors üblicherweise im Uhrzeigersinn dreht, schließt das Verriegelungselement in entgegengesetzter Richtung, in diesem Beispiel links herum. Hierdurch wird ein unbeabsichtigtes Öffnen der Verbindung im Betrieb, beispielsweise aufgrund eines Verhakens und Aufwickelns von Pflanzen an dem Verriegelungselement, sicher verhindert.

Die Kraft der Torsionsfeder kann ferner derart bemessen sein, dass einerseits eine sichere Sperrwirkung der Welle-Nabe-Verbindung und andererseits eine manuelle Bedienung des Verriegelungselements mit einer akzeptablen Kraft möglich ist.

Dies kann beispielsweise dann erreicht werden, wenn mit der Torsionsfeder ein Drehmoment von 4 Nm +/- 1 Nm erzeugt wird.

Insbesondere wenn das Verriegelungselement vorgespannt ist, kann vorgesehen sein, dass an der ersten Welle mindestens ein Anschlag derart vorgesehen ist, dass die Drehbewegung des Verriegelungselements in einer vorgegebenen Richtung begrenzbar ist. Daher wird sich das Verriegelungselement unter der Wirkung der Federvorspannung stets derart einstellen, dass ein entsprechender Teil des Verriegelungselements an dem Anschlag der ersten Welle zur Anlage kommt.

Bevorzugt ist das Verriegelungselement um einen vorgegebenen Drehwinkel verdrehbar angeordnet, welcher einer Verdrehung des Verriegelungselements kleiner als eine Zahnteilung entspricht. Eine vergleichbare Sicherungswirkung kann allerdings auch dann erzielt werden, wenn das Verriegelungselement um einen größeren Drehwinkel verdrehbar angeordnet ist, und zwar um ein ganzzahliges Vielfaches des der Zahnteilung entsprechenden Winkels, zu welchem der Drehwinkel addiert wird. Es kann ein weiterer Anschlag vorgesehen sein, welcher die Drehbewegung des Verriegelungselements relativ zur ersten Welle in einer zweiten Drehrichtung begrenzt.

Abhängig von der Vorspannkraft, mit welcher das Verriegelungselement in die verriegelte Position gedrängt wird, kann es erforderlich sein, zum Bedienen bzw. Verdrehen des Verriegelungselements ein Werkzeug einzusetzen. Dementsprechend weist die erste Welle ein erstes Angriffsmittel für ein Werkzeug auf. Das Verriegelungselement oder die Torsionsfeder weist ein zweites Angriffsmittel für ein Werkzeug auf. Mit dem Werkzeug sind die beiden Angriffsmittel relativ zueinander bewegbar, wodurch das Verriegelungselement von der verriegelten Position in die entriegelte Position oder umgekehrt verbringbar ist. Die beiden Angriffsmittel können beispielsweise in umfangsmäßiger Richtung beabstandet zueinander angeordnet sein, wenn sich das Verriegelungselement in seiner verriegelten Position befindet. Damit das Verriegelungselement entgegen der Vorspannkraft der Torsionsfeder in die entriegelte Position verbracht werden kann, können mit einer herkömmlichen Zange die beiden Angriffsmittel zusammengedrückt werden, sodass auch eine größere Vorspannkraft überwunden werden kann.

Bevorzugt ist die Innenverzahnung des Verriegelungselements derart ausgebildet, dass benachbarte Zähne der Innenverzahnung in umfangsmäßiger Richtung im Wesentlichen jeweils gleiche Abstände zueinander aufweisen.

Das Verriegelungselement ist verdrehbar gegenüber der ersten Welle angeordnet. Hierzu ist das Verriegelungselement bevorzugt derart zu sichern, dass eine Bewegung in Längsrichtung der ersten Welle im Wesentlichen ausgeschlossen ist. Hierzu kann das Verriegelungselement in axialer Richtung an der ersten Welle mittels eines Sicherungsrings, der gegebenenfalls in Form eines Sprengrings ausgeführt ist, gesichert sein.

Genauer gesagt kann die Welle-Nabe-Verbindung als Keilwellenverbindung ausgebildet sein. Benachbarte Keile bzw. Zähne können in umfangsmäßiger Richtung im Wesentlichen jeweils gleiche Abstände zueinander aufweisen. Mit anderen Worten kann die Nabe einen Hohlwellenbereich mit einer Innenverzahnung aufweisen, in den ein Teil der zweiten Welle mit einer zur Innenverzahnung der Nabe im Wesentlichen komplementär ausgebildeten Außenverzahnung einführbar ist, wenn die Welle-Nabe-Verbindung hergestellt wird.

Insbesondere für landwirtschaftliche Anwendungen weist die zweite Welle einen Zapfwellenstummel für einen Traktor auf. Dieser Zapfwellenstummel kann an seinem einen Ende ein 6-Zahnprofil und an seinem anderen Ende ein 21-Zahnprofil aufweisen.

Es gibt nun verschiedene Möglichkeiten, die Lehre der vorliegenden Erfindung in vorteilhafter Weise auszugestalten und weiterzubilden. Dazu wird einerseits auf die Unteransprüche und andererseits auf die nachfolgende Erläuterung der bevorzugten Ausführungsbeispiele der Erfindung anhand der Zeichnungen verwiesen. In Verbindung mit der Erläuterung der bevorzugten Ausführungsbeispiele der Erfindung anhand der Zeichnungen werden auch im allgemeinen bevorzugte Ausgestaltungen und Weiterbildungen der erfindungsgemäßen Lehre erläutert. Hierbei sind gleiche oder ähnliche Bauteile mit den selben Bezugszeichen gekennzeichnet. Es zeigen:
- Fig. 1: eine Schnittansicht eines Teils eines aus dem Stand der Technik bekannten Zapfwellengetriebes mit einer ersten und einer zweiten Welle, welche eine Welle-Nabe-Verbindung bilden,
- Fig. 2: eine Explosionsdarstellung der Welle-Nabe-Verbindung gemäß Fig. 1,
- Fig. 3: eine Explosionsdarstellung eines Ausführungsbeispiels der erfindungsgemäßen Vorrichtung zum Sichern einer Welle-Nabe-Verbindung,
- Fig. 4a: eine Seitenansicht des Ausführungsbeispiels gemäß Fig. 3, bei welchem die Welle-Nabe-Verbindung zwischen der ersten und zweiten Welle hergestellt ist und sich das Verriegelungselement in einer verriegelten Position befindet,
- Fig. 4b: eine Seitenansicht des Ausführungsbeispiels gemäß Fig. 3, bei welchem die Welle-Nabe-Verbindung zwischen der ersten und zweiten Welle hergestellt ist und sich das Verriegelungselement in einer entriegelten Position befindet,
- Fig. 5a: eine rückwärtige Ansicht des Ausführungsbeispiels gemäß Fig. 3, bei welchem die Welle-Nabe-Verbindung zwischen der ersten und zweiten Welle hergestellt ist und sich das Verriegelungselement in seiner verriegelten Position gemäß Fig. 4a befindet,
- Fig. 5b: eine rückwärtige Ansicht des Ausführungsbeispiels gemäß Fig. 3, bei welchem die Welle-Nabe-Verbindung zwischen der ersten und zweiten Welle hergestellt ist und sich das Verriegelungselement in seiner entriegelten Position gemäß Fig. 4b befindet, und
- Fig. 6: eine Schnittansicht des Ausführungsbeispiels gemäß Fig. 3, bei welchem die Welle-Nabe-Verbindung zwischen der ersten und zweiten Welle hergestellt ist.

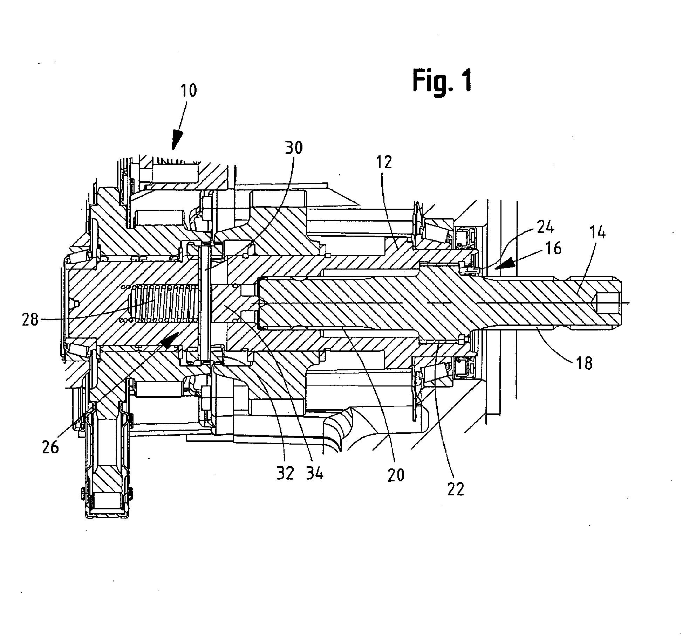

Fig. 1 zeigt eine Schnittansicht eines aus dem Stand der Technik bekannten Teils eines am Heck eines nicht dargestellten Traktors angeordneten Zapfwellengetriebes 10 mit einer ersten und einer zweiten Welle 12 und 14, welche eine Welle-Nabe-Verbindung 16 bilden.

Die zweite Welle 14 ist als umsteckbare doppelseitige Welle ausgeführt, mit einem 6-Zahnprofil 18 auf der einen und einem 21-Zahnprofil 20 auf der anderen Seite. Somit ist die Zapfwelle seitens eines Bedieners auf einfache Weise an Geräte mit verschiedenen Normdrehzahlen anpassbar (540 oder 1000 RPM, entsprechend den beiden unterschiedlichen Zahnprofilen).

Die zweite Welle 14 ist mittels einer Mitnahmeverzahnung 22 mit der Abtriebswelle bzw. der ersten Welle 12 des Zapfwellengetriebes 10 drehfest verbunden und über einen Sprengring 24 in axialer Richtung gesichert.

Die Handhabung des Sprengringes 24 wird als unkomfortabel empfunden, insbesondere wenn durch das Umsetzen der zweiten Welle 14 gleichzeitig über einen internen Mechanismus 26 eine Getriebeumschaltung zwischen den Normdrehzahlen vorgenommen wird. Der interne Mechanismus 26 umfasst unter anderem eine Feder 28, einen Stift 30, eine interne Schaltverzahnung 32, in welche der Stift 30 eingreift, und ein Zwischenstück 34, welches zwischen dem Stift 30 und der ersten Welle 14 angeordnet ist. Zur Getriebeumschaltung muss auf die zweite Welle 14 eine Druckkraft nach links ausgeübt werden, um die Federkraft der Feder 28 zu überwinden. Zugleich muss eine Drehbewegung der zweiten Welle 14 erfolgen, um die interne Schaltverzahnung 32 in eine schaltbare Stellung zu bringen. Der Bediener muss also simultan zur Druck- und Drehbewegung, die üblicherweise mit der linken Hand ausgeführt wird, mit der rechten Hand mittels einer Zange den Sprengring 24 tangential zusammenpressen und in die Nut 36 der ersten Welle 12 einführen.

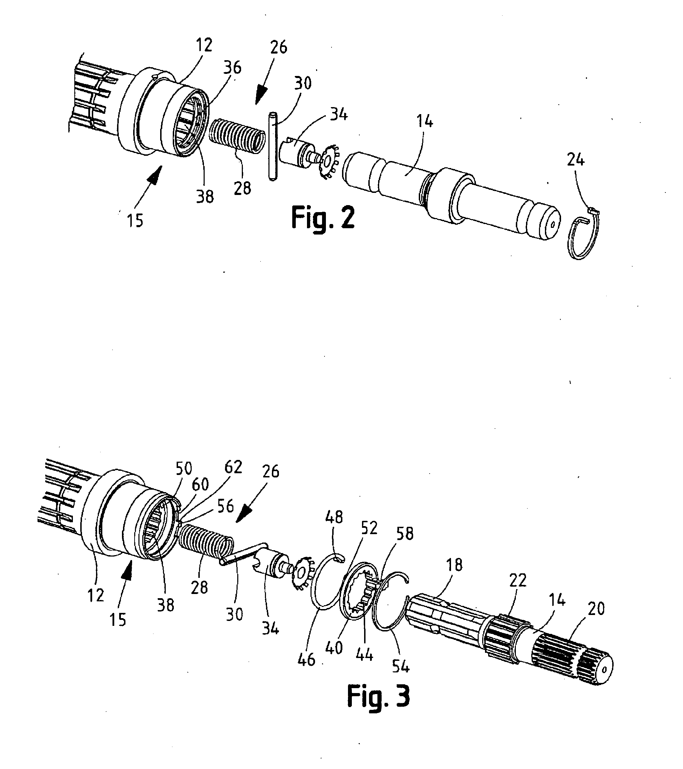

Fig. 2 zeigt in einer Explosionsdarstellung einige der beschriebenen Bauteile gemäß Fig. 1 in perspektivischer Ansicht.

Fig. 3 zeigt in einer perspektivischen Explosionsdarstellung ein Ausführungsbeispiel der erfindungsgemäßen Vorrichtung zum Sichern einer Welle-Nabe-Verbindung. Hierbei ist die zweite Welle 14 vergleichbar zur zweiten Welle 14 gemäß Fig. 1 und 2 ausgebildet. Auch die zweite Welle 14 gemäß Fig. 3 weist ein 6-Zahnprofil 18 und ein 21-Zahnprofil 20 an gegenüberliegenden Enden sowie eine Mitnahmeverzahnung 22 auf. Dementsprechend ist die in Form eines Zapfwellenstummels ausgebildete zweite Welle 14 in den Hohlwellenbereich bzw. in die Nabe 15 der ersten Welle 12 einführbar, um die Welle-Nabe-Verbindung 16 zwischen der ersten und zweiten Welle 12 und 14 herzustellen. Entsprechend der äußeren Mitnahmeverzahnung 22 der zweiten Welle 14 ist an der ersten Welle 12 eine nahezu komplementär ausgebildete, im Hohlwellenbereich angeordnete Mitnahmeverzahnung 38 vorgesehen, in welche die Mitnahmeverzahnung 22 formschlüssig eingreift.

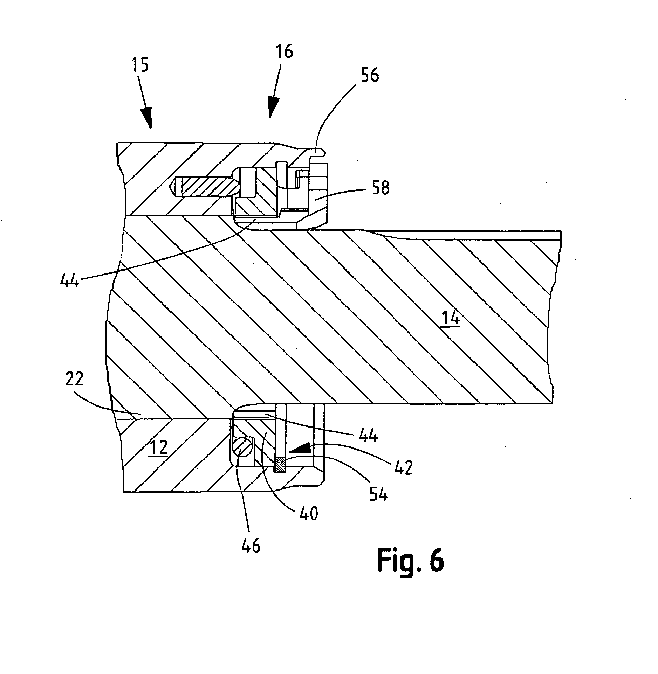

Gemäß Fig. 6 ist das Verriegelungselement 40 an der ersten Welle 12 angeordnet, und zwar in einem endseitig vorgesehenen Hohlwellenbereich 42. Das Verriegelungselement 40 ist im Wesentlichen ringförmig ausgebildet und weist eine Innenverzahnung 44 auf. Die Innenverzahnung 44 des Verriegelungselements 40 ist derart ausgebildet, dass benachbarte Zähne der Innenverzahnung 44 in umfangsmäßiger Richtung jeweils gleiche Abstände zueinander aufweisen. Die Innenverzahnung 44 des Verriegelungselements 40 ist im Wesentlichen komplementär zur Mitnahmeverzahnung 22 der zweiten Welle ausgebildet. Das Verriegelungselement 40 ist relativ zur ersten Welle 12 in dem Hohlwellenbereich 42 verdrehbar angeordnet.

Das Verriegelungselement 40 ist mittels einer von der Torsionsfeder 46 erzeugten Vorspannkraft in eine verriegelte Position drängbar. Die Torsionsfeder 46 weist einen ersten Zapfen 48 auf, welcher in an der ersten Welle montiertem Zustand in eine an der ersten Welle 12 vorgesehene Aussparung bzw. Bohrung 50 eingreift. Weiterhin weist die Torsionsfeder 46 einen zweiten Zapfen 52 auf, welcher in eine an dem Verriegelungselement 40 vorgesehene Aussparung eingreift. Auf diese Weise übt die Torsionsfeder 46 ein Drehmoment in Richtung der verriegelten Position des Verriegelungselements 40 aus und bewirkt eine Drehung des Verriegelungselements 40 relativ zur ersten Welle 12 entgegen dem Uhrzeigersinn. Das Verriegelungselement 40 ist durch den Sicherungsring 54 im Hohlwellenbereich 42 der ersten Welle 12 in axialer Richtung gesichert.

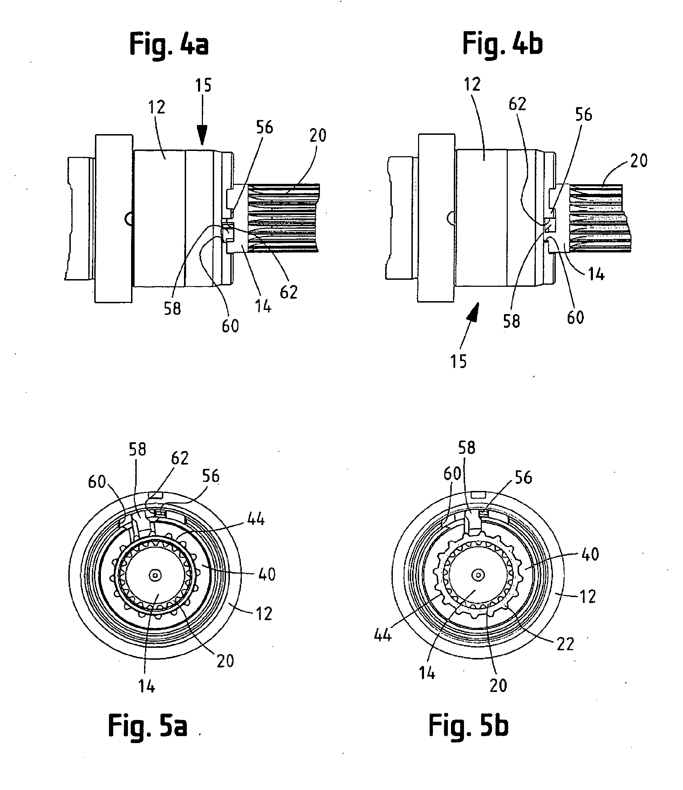

Gemäß Fig. 6 ist das Verriegelungselement 40 im endseitigen Hohlwellenbereich 42 der ersten Welle 12 derart angeordnet, dass die Innenverzahnung 44 des Verriegelungselements 40 der Außenverzahnung bzw. Mitnahmeverzahnung 22 der zweiten Welle 14 räumlich nachgeordnet ist, nämlich hinsichtlich der Richtung, in die die zweite Welle 14 zum Lösen der Welle-Nabe-Verbindung 16 zu bewegen ist. Ein Lösen bzw. Herstellen der Welle-Nabe-Verbindung 16 ist nur dann möglich, wenn die Innenverzahnung 44 des Verriegelungselements 40 mit der Mitnahmeverzahnung 38 der ersten Welle 12 fluchtend bzw. überdeckend angeordnet ist. Mit anderen Worten können die Zähne der Mitnahmeverzahnung 22 der zweiten Welle 14 in die Lücken der Innenverzahnung 44 des Verriegelungselements 40 und in die Lücken der Mitnahmeverzahnung 38 der ersten Welle 12 eingreifen, wenn sich das Verriegelungselement 40 in einer entriegelten Position gemäß Fig. 4b und 5b befindet. Die Welle-Nabe-Verbindung 16 ist demnach gesichert, wenn die zweite Welle 14 in der Nabe 15 der ersten Welle 12 eingebracht ist und die Zähne der Innenverzahnung 44 des Verriegelungselements 40 nicht fluchtend bzw. überdeckend zu den Zähnen der Außenverzahnung bzw. Mitnahmeverzahnung 22 der zweiten Welle 14 angeordnet sind, wenn sich das Verriegelungselement 40 also in seiner verriegelten Position gemäß Fig. 4a und 5a befindet.

Zur einfacheren Bedienung der Vorrichtung ist an der ersten Welle 12 ein erstes Angriffsmittel 56 vorgesehen. An dem Verriegelungselement 40 ist ein zweites Angriffsmittel 58 vorgesehen. Das zweite Angriffsmittel 58 kann an den Anschlagflächen 60 und 62 zur Anlage kommen. Die Anschlagflächen 60 und 62 sind gemäß Fig. 3, 4a und 4b an der ersten Welle 12 vorgesehen. Somit bilden die Anschlagflächen 60 und 62 Anschläge, mit welchen die Drehbewegung des Verriegelungselements 40 in zwei Drehrichtungen begrenzbar ist. Die beiden Angriffsmittel 56 und 58 sind derart ausgebildet, dass diese als Betätigungselemente genutzt werden können, an denen der Bediener mittels einer gewöhnlichen Zange das Verriegelungselement 40 relativ zur ersten Welle 12 in die entriegelte Position drehen kann.

Das Verriegelungselement 40 kann durch mechanische Bearbeitung, durch Feingießen von Stahl, durch Feinschmieden oder durch Sintern hergestellt werden. Auch mehrteilige Lösungen sind denkbar. Für die beschriebene Anwendung an einem Traktor ist eine Wärmebehandlung und ein Rostschutz vorgesehen, um den rauen Umgebungsbedingungen Rechnung zu tragen. Auch die übrigen Bauteile können durch einen Korrosionsschutz, beispielsweise durch Verzinken, vor Schwergängigkeit durch Rostbildung geschützt werden. Gemäß Fig. 6 ist die Torsionsfeder 46 vom Verriegelungselement 40 vor Eindringen durch Schmutz in den Hohlwellenbereich 42 der Welle 12 geschützt angeordnet.

Zum Herausnehmen der Welle 14 muss der Bediener mit einem Werkzeug, beispielsweise mit einer üblichen Zange, das zweite Angriffsmittel 58 des Verriegelungselements 40 gegen die erste Welle 12 verdrehen. Dies erfolgt durch Ansetzen der Zange an dem ersten und zweiten Angriffsmittel 56 und 58 sowie durch Zusammendrücken. Hierdurch wird das Verriegelungselement 40 in seine entriegelte Position gemäß Fig. 4b und 5b verdreht. Nun kann die zweite Welle 14 herausgezogen werden. Zum Einsetzen der zweiten Welle 14 wird umgekehrt verfahren.

Steht die Innenverzahnung 44 des Verriegelungselements 40 in Überdeckung mit der Mitnahmeverzahnung 38 der ersten Welle 12, so kann die zweite Welle 14 durch das Verriegelungselement 40 hindurch in das Mitnahmeprofil bzw. in die Innenverzahnung 38 der ersten Welle 12 eingeführt werden. Wird das Verriegelungselement 40 kleiner als eine Zahnteilung relativ zur ersten Welle 12 verdreht, verdecken die Zähne der Innenverzahnung 44 des Verriegelungselements 40 die Zähne der Mitnahmeverzahnung 22 der zweiten Welle 14, sodass eine axiale Sicherung der Welle-Nabe-Verbindung 16 erzielt wird. Für die entriegelte bzw. verriegelte Position des Verriegelungselements 40 relativ zur ersten Welle 12 sind entsprechende Anschläge 60 und 62 vorgesehen, und die verriegelte Position wird mittels der Torsionsfeder 46 vorgespannt, sodass sich das Verriegelungselement 40 stets in der verriegelten Position befindet und nur durch eine äußere Betätigung eines Bedieners entgegen der Wirkung der Federkraft der Torsionsfeder 46 zum Herausnehmen oder zum Einsetzen der zweiten Welle 14 in die entriegelte Position verbracht werden kann.

Die Sicherung der Welle-Nabe-Verbindung 16 mittels des Verriegelungselements 40 erfolgt entgegen der Drehrichtung der ersten Welle 12. Bei der ersten Welle 12 handelt es sich um eine am Heck eines Traktors angeordnete Zapfwelle. Da sich Heckzapfwellen bei einem Traktor üblicherweise im Uhrzeigersinn drehen, schließt das Verriegelungselement 40 in entgegengesetzter Richtung, also entgegen des Uhrzeigersinns. Hierdurch wird ein unbeabsichtigtes Öffnen der Welle-Nabe-Verbindung 16 im Betrieb, beispielsweise aufgrund eines Verhakens oder Aufwickelns von Pflanzen an dem zweiten Angriffsmittel 58 des Verriegelungselements 40 sicher verhindert.

Um die Gefahr von Verletzungen zu verringern, befinden sich die ersten und zweiten Angriffsmittel 56, 58 innerhalb der Rotationskontur der ersten Welle 12.

## Patentansprüche

1. Vorrichtung zum Sichern einer Welle-Nabe-Verbindung zweier Wellen, insbesondere zum Sichern eines Zapfwellenstummels an einer Zapfwelle eines Traktors, mit einem Verriegelungselement (40), mittels welchem ein Lösen einer hergestellten Welle-Nabe-Verbindung (16) zwischen den beiden Wellen (12, 14) in axialer Richtung verhinderbar ist, wobei eine der beiden Wellen (12) eine Nabe (15) mit Mitteln (38) zur formschlüssigen Verbindung mit der anderen Welle (14) aufweist, wobei die andere Welle (14) Mittel (22) zur formschlüssigen Verbindung mit der die Nabe (15) umfassenden Welle (12) aufweist, wobei das Verriegelungselement (40) im Wesentlichen ringförmig ausgebildet und an der ersten der beiden Wellen (12) angeordnet ist, wobei das Verriegelungselement (40) eine Verzahnung (44) aufweist, welche im Wesentlichen komplementär zu einer Verzahnung (22) der zweiten der beiden Wellen (14) ausgebildet ist, wobei das Verriegelungselement (40) relativ zur ersten Welle (12) von einer verriegelten Position in eine entriegelte Position verdrehbar angeordnet ist, wobei in der verriegelten Position die Verzahnungen (44, 22) überdeckend zueinander angeordnet und in der entriegelten Position die Verzahnungen (44, 22) nicht überdeckend zueinander angeordnet sind, und wobei das Verriegelungselement (40) derart angeordnet ist, dass in der verriegelten Position eine hergestellte Welle-Nabe-Verbindung (16) zwischen den beiden Wellen (12, 14) durch die insbesondere stirnseitige Anlage der Verzahnung (44) des Verriegelungselements (40) an der Verzahnung (22) der zweiten Welle (14) gesichert ist, **dadurch gekennzeichnet, dass** das Verriegelungselement (40) mittels einer Vorspannkraft in die verriegelte Position drängbar ist, wobei die Vorspannkraft mittels einer Torsionsfeder (46) erzeugt wird.

2. Vorrichtung nach Anspruch 1, **dadurch gekennzeichnet, dass** das Verriegelungselement (40) an einem Endbereich der ersten Welle (12) angeordnet ist.

3. Vorrichtung nach Anspruch 1 oder 2, **dadurch gekennzeichnet, dass** das Verriegelungselement (40) derart an der ersten Welle (12) angeordnet ist, dass bei einer hergestellten Welle-Nabe-Verbindung (16) zwischen den beiden Wellen (12, 14) bezüglich der axialen Richtung, in welcher die eine Welle (14) aus der Nabe (15) der anderen Welle (12) zu lösen ist, die Verzahnung (44) des Verriegelungselements (40) der Verzahnung (22) der zweiten Welle (14) nachgeordnet ist.

4. Vorrichtung nach einem der Ansprüche 1 bis 3, **dadurch gekennzeichnet, dass** die Verzahnung (44) des Verriegelungselements (40) im Wesentlichen komplementär zu den Mitteln (22) zur formschlüssigen Verbindung der zweiten Welle (14) ausgebildet ist.

5. Vorrichtung nach einem der Ansprüche 1 bis 4, **dadurch gekennzeichnet, dass** das Verriegelungselement (40) eine Innenverzahnung (44) aufweist, welche im Wesentlichen komplementär zu einer Außenverzahnung (22) der zweiten Welle (14) ausgebildet ist.

6. Vorrichtung nach einem der Ansprüche 1 bis 5, **dadurch gekennzeichnet, dass** die Kraft der Torsionsfeder derart bemessen ist, dass einerseits eine sichere Sperrwirkung der Welle-Nabe-Verbindung (16) und andererseits eine manuelle Bedienung des Verriegelungselements (40) möglich ist.

7. Vorrichtung nach einem der Ansprüche 1 bis 6, **dadurch gekennzeichnet, dass** an der ersten Welle (12) mindestens ein Anschlag (60, 62) derart vorgesehen ist, dass die Drehbewegung des Verriegelungselements (40) in einer vorgegebenen Richtung begrenzbar ist.

8. Vorrichtung nach einem der Ansprüche 1 bis 7, **dadurch gekennzeichnet, dass** das Verriegelungselement (40) um einen vorgegebenen Drehwinkel verdrehbar angeordnet ist, welcher einer Verdrehung des Verriegelungselements (40) kleiner als eine Zahnteilung entspricht.

9. Vorrichtung nach einem der Ansprüche 1 bis 8, **dadurch gekennzeichnet, dass** die erste Welle (12) ein erstes Angriffsmittel (56) für ein Werkzeug aufweist und dass das Verriegelungselement (40) oder die Torsionsfeder (46) ein zweites Angriffsmittel (58) für ein Werkzeug aufweist und dass mittels eines Werkzeugs die beiden Angriffsmittel (56, 58) relativ zueinander bewegbar sind, wodurch das Verriegelungselement (40) von der verriegelten Position in die entriegelte Position oder umgekehrt verbringbar ist.

10. Vorrichtung nach einem der Ansprüche 1 bis 9, **dadurch gekennzeichnet, dass** die Innenverzahnung (44) des Verriegelungselements (40) derart ausgebildet ist, dass benachbarte Zähne der Innenverzahnung (44) in umfangsmäßiger Richtung im Wesentlichen jeweils gleiche Abstände zueinander aufweisen.

11. Vorrichtung nach einem der Ansprüche 1 bis 10, **dadurch gekennzeichnet, dass** das Verriegelungselement (40) in axialer Richtung an der ersten Welle (12) mittels eines Sicherungsrings (54) gesichert ist.

12. Vorrichtung nach einem der Ansprüche 1 bis 11, **dadurch gekennzeichnet, dass** die Welle-Nabe-Verbindung (16) als Keilwellenverbindung ausgebildet ist und dass benachbarte Keile in umfangsmäßiger Richtung im Wesentlichen jeweils gleiche Abstände zueinander aufweisen.

13. Vorrichtung nach einem der Ansprüche 1 bis 12, **dadurch gekennzeichnet, dass** die zweite Welle (14) einen Zapfwellenstummel für einen Traktor aufweist, welcher ein 6-Zahnprofil (18) und/oder ein 21-Zahnprofil (20) aufweist.

14. Welle mit einer Sicherungsvorrichtung, wobei mittels der Sicherungsvorrichtung eine Welle-Nabe-Verbindung (16) zwischen der Welle (12) und einer anderen Welle (14) in axialer Richtung sicherbar ist, wobei die Sicherungsvorrichtung eine Vorrichtung nach einem der Ansprüche 1 bis 13 aufweist.

## Claims

1. Device for securing a shaft-hub connection of two shafts, in particular for securing a power take-off shaft stub on a power take-off shaft of a tractor, with a locking element (40) by means of which release in the axial direction of a shaft-hub connection (16) between the two shafts (12, 14) is preventable, wherein one of the two shafts (12) has a hub (15) with means (38) for the interlocking connection to the other shaft (14), wherein the other shaft (14) has means (22) for the interlocking connection to the shaft (12) surrounding the hub (15), wherein the locking element (40) is of substantially annular design and is arranged on the first of the two shafts (12), wherein the locking element (40) has a toothing (44) which is designed in a substantially complementary manner to a toothing (22) of the second of the two shafts (14), wherein the locking element (40) is arranged rotatably relative to the first shaft (12) from a locked position into an unlocked position, wherein, in the locked position, the toothings (44, 22) are arranged in an overlapping manner with respect to each other and, in the unlocked position, the toothings (44, 22) are arranged in a non-overlapping manner with respect to each other, and wherein the locking element (40) is arranged in such a manner that, in the locked position, a shaft-hub connection (16) produced between the two shafts (12, 14) is secured by the toothing (44) of the locking element (40) being in contact in particular on the end side with the toothing (22) of the second shaft (14), **characterized in that** the locking element (40) can be forced by means of a prestressing force into the locked position, the prestressing force being produced by means of a torsion spring (46).

2. Device according to Claim 1, **characterized in that** the locking element (40) is arranged on an end region of the first shaft (12).

3. Device according to Claim 1 or 2, **characterized in that** the locking element (40) is arranged on the first shaft (12) in such a manner that, when a shaft-hub connection (16) is produced between the two shafts (12, 14) with respect to the axial direction in which the one shaft (14) can be released from the hub (15) of the other shaft (12), the toothing (44) of the locking element (40) is arranged downstream of the toothing (22) of the second shaft (14).

4. Device according to one of Claims 1 to 3, **characterized in that** the toothing (44) of the locking element (40) is of substantially complementary design with respect to the means (22) for the interlocking connection of the second shaft (14).

5. Device according to one of Claims 1 to 4, **characterized in that** the locking element (40) has an internal toothing (44) which is of substantially complementary design with respect to an outer toothing (22) of the second shaft (14).

6. Device according to one Claims 1 to 5, **characterized in that** the force of the torsion spring is dimensioned in such a manner that, on the one hand, the shaft-hub connection (16) can be securely locked and, on the other hand, the locking element (40) can be operated manually.

7. Device according to one of Claims 1 to 6, **characterized in that** at least one stop (60, 62) is provided on the first shaft (12) in such a manner that the rotational movement of the locking element (40) is limitable in a predetermined direction.

8. Device according to one of Claims 1 to 7, **characterized in that** the locking element (40) is arranged rotatably about a predetermined angle of rotation which corresponds to a rotation of the locking element (40) of less than one tooth pitch.

9. Device according to one of Claims 1 to 8, **characterized in that** the first shaft (12) has a first engagement means (56) for a tool, and **in that** the locking element (40) or the torsion spring (46) has a second engagement means (58) for a tool, and **in that** the two engagement means (56, 58) are movable relative to each other by means of a tool, as a result of which the locking element (40) is bringable from the locked position into the unlocked position, or vice versa.

10. Device according to one of Claims 1 to 9, **characterized in that** the inner toothing (44) of the locking element (40) is designed in such a manner that adjacent teeth of the inner toothing (44) are at substantially equal distances from one another in the circumferential direction.

11. Device according to one of Claims 1 to 10, **characterized in that** the locking element (40) is secured in the axial direction on the first shaft (12) by means of a securing ring (54).

12. Device according to one of Claims 1 to 11, **characterized in that** the shaft-hub connection (16) is designed as a spline connection, and **in that** adjacent splines are at substantially equal distances from one another in the circumferential direction.

13. Device according to one of Claims 1 to 12, **characterized in that** the second shaft (14) has a power take-off shaft stub for a tractor, said power take-off shaft stub having a 6-tooth profile (18) and/or a 21-tooth profile (20).

14. Shaft with a securing device, wherein a shaft-hub connection (16) between the shaft (12) and another shaft (14) is securable in the axial direction by means of the securing device, wherein the securing device has a device according to one of Claims 1 to 13.

## Revendications

1. Dispositif pour maintenir une liaison arbre-moyeu entre deux arbres, notamment pour fixer un bout d'arbre de prise de force sur un arbre de prise de force d'un tracteur, avec un élément de verrouillage (40) au moyen duquel on peut empêcher un desserrage d'une liaison arbre-moyeu (16) établie entre les deux arbres (12, 14) dans la direction axiale, l'un des deux arbres (12) présentant un moyeu (15) avec des moyens (38) pour la liaison par engagement par correspondance géométrique avec l'autre arbre (14), l'autre arbre (14) présentant des moyens (22) pour la liaison par engagement par correspondance géométrique avec l'arbre (12) comprenant le moyeu (15), l'élément de verrouillage (40) étant réalisé essentiellement sous forme annulaire et étant disposé sur le premier des deux arbres (12), l'élément de verrouillage (40) présentant une denture (44) qui est réalisée de manière essentiellement complémentaire à une denture (22) du deuxième des deux arbres (14), l'élément de verrouillage (40) étant disposé de manière à pouvoir tourner par rapport au premier arbre (12) d'une position verrouillée dans une position déverrouillée, les dentures (44, 22), dans la position verrouillée, étant disposées en se recouvrant les unes les autres, et dans la position déverrouillée, les dentures (44, 22) étant disposées sans se recouvrir les unes les autres, et l'élément de verrouillage (40) étant disposé de telle sorte que dans la position verrouillée, une liaison arbre-moyeu (16) établie entre les deux arbres (12, 14) soit maintenue par l'appui notamment frontal de la denture (44) de l'élément de verrouillage (40) contre la denture (22) du deuxième arbre (14), **caractérisé en ce que** l'élément de verrouillage (40) peut être contraint dans la position verrouillée au moyen d'une force de précontrainte, la force de précontrainte étant produite au moyen d'un ressort de torsion (46).

2. Dispositif selon la revendication 1, **caractérisé en ce que** l'élément de verrouillage (40) est disposé dans une région d'extrémité du premier arbre (12).

3. Dispositif selon la revendication 1 ou 2, **caractérisé en ce que** l'élément de verrouillage (40) est disposé sur le premier arbre (12) de telle sorte que dans le cas d'une liaison arbre-moyeu (16) établie entre les deux arbres (12, 14) par rapport à la direction axiale, dans laquelle l'un des arbres (14) peut être desserré du moyeu (15) de l'autre arbre (12), la denture (44) de l'élément de verrouillage (40) soit disposée après la denture (22) du deuxième arbre (14).

4. Dispositif selon l'une quelconque des revendications 1 à 3, **caractérisé en ce que** la denture (44) de l'élément de verrouillage (40) est réalisée essentiellement de manière complémentaire aux moyens (22) pour la connexion par engagement par correspondance géométrique du deuxième arbre (14).

5. Dispositif selon l'une quelconque des revendications 1 à 4, **caractérisé en ce que** l'élément de verrouillage (40) présente une denture interne (44) qui est réalisée de manière essentiellement complémentaire à une denture externe (22) du deuxième arbre (14).

6. Dispositif selon l'une quelconque des revendications 1 à 5, **caractérisé en ce que** la force du ressort de torsion est dimensionnée de telle sorte que d'une part, un effet de blocage sûr de la liaison arbre-moyeu (16) soit possible, ainsi que d'autre part une commande manuelle de l'élément de verrouillage (40).

7. Dispositif selon l'une quelconque des revendications 1 à 6, **caractérisé en ce que** l'on prévoit sur le premier arbre (12) au moins une butée (60, 62), de telle sorte que le mouvement de rotation de l'élément de verrouillage (40) dans une direction prédéfinie puisse être limité.

8. Dispositif selon l'une quelconque des revendications 1 à 7, **caractérisé en ce que** l'élément de verrouillage (40) est disposé de manière à pouvoir tourner d'un angle de rotation prédéfini, qui correspond à une rotation de l'élément de verrouillage (40) inférieure à une division de dent.

9. Dispositif selon l'une quelconque des revendications 1 à 8, **caractérisé en ce que** le premier arbre (12) présente un premier moyen d'application (56) pour un outil et **en ce que** l'élément de verrouillage (40) ou le ressort de torsion (46) présente un deuxième moyen d'application (58) pour un outil et **en ce que** les deux moyens d'application (56, 58) peuvent être déplacés l'un par rapport à l'autre au moyen d'un outil, de sorte que l'élément de verrouillage (40) puisse être amené de la position verrouillée dans la position déverrouillée ou inversement.

10. Dispositif selon l'une quelconque des revendications 1 à 9, **caractérisé en ce que** la denture interne (44) de l'élément de verrouillage (40) est réalisée de telle sorte que des dents adjacentes de la denture interne (44) dans la direction périphérique présentent essentiellement à chaque fois les mêmes espacements.

11. Dispositif selon l'une quelconque des revendications 1 à 10, **caractérisé en ce que** l'élément de verrouillage (40) est maintenu dans la direction axiale sur le premier arbre (12) au moyen d'une bague de fixation (54).

12. Dispositif selon l'une quelconque des revendications 1 à 11, **caractérisé en ce que** la liaison arbre-moyeu (16) est réalisée sous forme de liaison à arbre cannelé et **en ce que** des cannelures adjacentes dans la direction périphérique présentent essentiellement à chaque fois les mêmes espacements.

13. Dispositif selon l'une quelconque des revendications 1 à 12, **caractérisé en ce que** le deuxième arbre (14) présente un bout d'arbre de prise de force pour un tracteur, qui présente un profil à 6 dents (18) et/ou un profil à 21 dents (20).

14. Arbre comprenant un dispositif de maintien, le dispositif de maintien permettant de maintenir une liaison arbre-moyeu (16) entre l'arbre (12) et un autre arbre (14) dans la direction axiale, le dispositif de maintien présentant un dispositif selon l'une quelconque des revendications 1 à 13.
